# EUROPÄISCHE PATENTSCHRIFT

(11) **EP 2 319 165 B1**
(45) Veröffentlichungstag und Bekanntmachung des Hinweises auf die Patenterteilung: **23.10.2013**
(21) Anmeldenummer: 09781582.3
(22) Anmeldetag: 06.08.2009
(51) Int. Cl.: H02M 3/07

(54) **SPANNUNGSVERSORGUNG MIT LADUNGSPUMPENSCHALTUNG**
POWER SUPPLY HAVING A CHARGE PUMP CIRCUIT
ALIMENTATION EN TENSION AVEC CIRCUIT À POMPE DE CHARGE

(30) Priorität: 29.08.2008 DE 102008046324
(43) Veröffentlichungstag der Anmeldung: 11.05.2011
(73) Patentinhaber: Flextronics International Kft., Tab 8660 (HU)
(72) Erfinder: PETRIDIS, Georgios, 71332 Waiblingen (DE)
(74) Vertreter: Rupprecht, Kay
(86) Internationale Anmeldenummer: PCT/EP2009/060239
(87) Internationale Veröffentlichungsnummer: WO 2010/023080

(56) Entgegenhaltungen:
- US-A- 5 262 934
- US-A- 5 606 491
- US-A1- 2002 034 082
- US-A1- 2005 146 375
- US-A1- 2006 109 047

## Beschreibung

Die Erfindung betrifft eine Spannungsversorgung umfassend eine Spannungsquelle und eine von dieser gespeiste Ladungspumpenschaltung zur Erzeugung einer Ausgangsspannung an einem Ausgang.

Derartige Spannungsversorgungen mit Ladungspumpenschaltungen sind beispielsweise aus der US 5,262,934, US 2006/109047 A1, US 2005/146375 A1, US 5,606,491 und US 2002/034082 A1 bekannt. Diese Spannungsversorgungen arbeiten jedoch mit begrenzter Effizienz.

Der Erfindung liegt daher die Aufgabe zugrunde, eine Spannungsversorgung mit einer Ladungspumpenschaltung derart zu verbessern, dass diese effizienter arbeitet.

Diese Aufgabe wird durch eine Spannungsversorgung mit den Merkmalen des Anspruchs 1 gelöst. Sie zeichnet sich durch eine Ladungspumpenschaltung aus, die abwechselnd einen ersten Taktzustand und einen zweiten Taktzustand aufweist, wobei in dem ersten Taktzustand der erste Ladungspumpenkondensator zwischen Versorgungsspannung und Masse geschaltet ist und durch die Spannungsquelle auf die Versorgungsspannung aufgeladen wird und der zweite Ladungspumpenkondensator zwischen die Spannungsquelle und den Ausgang in Reihe geschaltet ist, und wobei in dem zweiten Taktzustand der erste Ladungspumpenkondensator und der zweite Ladungspumpenkondensator derart in Reihe geschaltet sind, dass der im ersten Taktzustand positiv aufgeladene Anschluss des ersten Ladungspumpenkondensators auf Masse liegt und der zweite Ladungspumpenkondensator durch die Spannungsquelle aufgeladen wird, sodass die Ausgangsspannung (Uₐ) bis zum Dreifachen der Versorgungsspannung (Uᵥ) erreichen kann.

Der Vorteil dieser Lösung ist darin zu sehen, dass in einfacher Weise eine günstige Spannungsversorgung realisierbar ist.

Besonders effizient arbeitet eine derartige Spannungsversorgung dann, wenn die Ladungspumpenschaltungen zwei Taktzustände aufweisen und stets die Ladungspumpenschaltung des einen Kanals in einem Taktzustand und die Ladungspumpenschaltung des anderen Kanals in dem anderen Taktzustand ist.

Vorzugsweise ist dabei beim Betrieb der Ladungspumpenschaltungen der beiden Kanäle vorgesehen, dass die Ladungspumpenschaltungen synchron getaktet werden, so dass diese synchron die Taktzustände wechseln.

Zweckmäßigerweise lässt sich dies dadurch erreichen, dass die Ladungspumpenschaltungen der zwei Kanäle durch einen Taktgenerator getaktet sind.

Insbesondere sind dabei die Ladungspumpenschaltungen so ausgebildet, wie dies eingangs im Zusammenhang mit den eingangs beschriebenen verschiedenen Ausführungsformen der erfindungsgemäßen Spannungsversorgung beschrieben wurde.

Die eingangs genannte Aufgabe wird erfindungsgemäß alternativ oder ergänzend zu den bislang beschriebenen Ausführungsbeispielen dadurch gelöst, dass die Ladungspumpenschaltung einen ersten Ladungspumpenkondensator durch die Spannungsquelle auflädt und einen zweiten Ladungspumpenkondensator durch Reihenschaltung des ersten Ladungspumpenkondensators und der Spannungsquelle auflädt.

Der Vorteil dieser Lösung ist darin zu sehen, dass durch die beiden Ladungspumpenkondensatoren in einfacher Weise eine höhere Ausgangsspannung erzeugt werden kann, als sie die Spannungsquelle liefert.

Besonders günstig ist es dabei, wenn die Ladungspumpenschaltung einen Ausgang durch Reihenschaltung des zweiten Ladungspumpenkondensators und der Spannungsquelle speist, so dass damit eine Ausgangsspannung erreicht werden kann, die bis zu dem Dreifachen einer Versorgungsspannung der Spannungsquelle betragen kann.

Insbesondere erlaubt eine derart hohe Ausgangsspannung auch in einfacher Weise und mit begrenzter Größe der Ladungspumpenkondensatoren eine nennenswert große Ausgangsleistung zur Verfügung zu stellen.

Hinsichtlich der Funktion der Ladungspumpenschaltung wurden bislang keine näheren Angaben gemacht.

So sieht eine vorteilhafte Lösung vor, dass die Ladungspumpenschaltung zwei Taktzustände aufweist und in einem der Taktzustände die Ausgangsleitung speist.

Vorteilhafterweise weisen dabei die zwei Taktzustände dieselbe Taktzeitdauer auf.

Eine besonders vorteilhafte Lösung der Ladungspumpenschaltung sieht dabei vor, dass in einem ersten Taktzustand eine Aufladung des ersten Ladungspumpenkondensators erfolgt und eine Ausgangsspannung durch Reihenschaltung des zweiten Ladungspumpenkondensators und der Spannungsquelle erzeugt wird und dass in einem zweiten Taktzustand der zweite Ladungspumpenkondensator durch Reihenschaltung der Spannungsquelle und des ersten Ladungspumpenkondensators aufgeladen wird.

Eine Aufladung des zweiten Ladungspumpenkondensators in dem zweiten Taktzustand lässt sich besonders effizient dadurch durchführen, dass die Ladungspumpenschaltung den zweiten Ladungspumpenkondensator durch masseseitige Reihenschaltung mit dem invertierten ersten Ladungspumpenkondensator mittels der Spannungsquelle auflädt.

Eine derartige masseseitige Reihenschaltung des invertierten ersten Ladungspumpenkondensators lässt sich vorteilhaft dadurch erreichen, dass die Ladungspumpenschaltung mit einer zwei Schalter umfassenden push-pull-Stufe einen ersten Anschluss des ersten Ladungspumpenkondensators wechselweise mit einer Versorgungsleitung und Masse verbindet.

Ferner ist vorzugsweise die masseseitige Reihenschaltung dadurch realisierbar, dass die Ladungspumpenschaltung mit zwei Schaltern einen zweiten Anschluss des ersten Ladungspumpenkondensators wechselweise mit Masse verbindet oder mit dem zweiten Ladungspumpenkondensator in Reihe schaltet.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein erstes Ausführungsbeispiel einer erfindungsgemäßen Spannungsversorgung in einem ersten Taktzustand;
- Fig. 2: das erste Ausführungsbeispiel der erfindungsgemäßen Spannungsversorgung in einem zweiten Taktzustand;
- Fig. 3: eine schematische Darstellung von Potentialen an einzelnen Mittelabgriffen des ersten Ausführungsbeispiels der Spannungsversorgung;
- Fig. 4: ein zweites Ausführungsbeispiel einer erfindungsgemäßen Spannungsversorgung mit zwei Kanälen ähnlich Fig. 1 wobei ein Kanal in einem Taktzustand und der andere Kanal im anderen Taktzustand ist;
- Fig. 5: eine schematische Darstellung der Potentiale ähnlich Fig. 3 beim zweiten Ausführungsbeispiel und
- Fig. 6: ein drittes Ausführungsbeispiel einer erfindungsgemäßen Spannungsversorgung welches eine Schaltungsrealisierung des zweiten Ausführungsbeispiels darstellt.

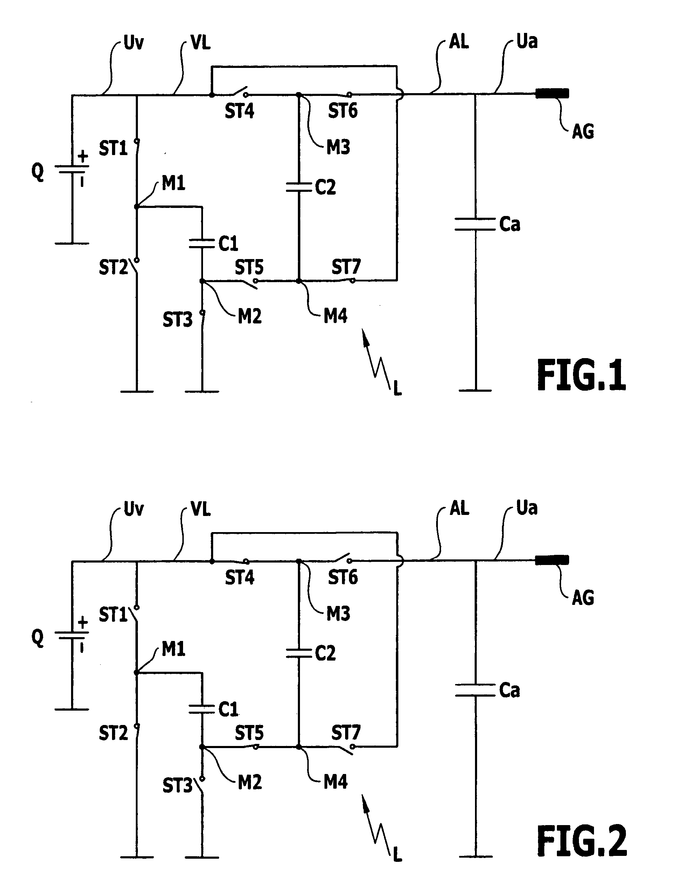

Ein erstes Ausführungsbeispiel einer erfindungsgemäßen Spannungsversorgung, dargestellt in Fig. 1 und Fig. 2, ausgebildet als Ladungspumpenschaltung L, umfasst eine Spannungsquelle Q, welche eine Versorgungsspannung Uv an einer Versorgungsleitung VL zur Verfügung stellt.

Zwischen der Versorgungsleitung VL und Masse sind zwei als push-pull-Stufe in Reihe geschaltete elektronisch gesteuerte Schalter ST1 und ST2 vorgesehen, mit welchen ein zwischen dem ersten Schalter ST1 und dem zweiten Schalter ST2 liegender erster Mittelabgriff M1 entweder auf die Versorgungsspannung Uv oder auf Masse schaltbar ist.

Zwischen dem ersten Mittelabgriff M1 und einem zweiten Mittelabgriff M2 liegt ein erster Ladungspumpenkondensator C1, wobei noch ein dritter elektronischer Schalter ST3 vorgesehen ist, mit welchem der zweite Mittelabgriff M2 mit Masse verbindbar ist.

Ein zweiter Ladungspumpenkondensator C2 liegt zwischen einem dritten Mittelabgriff M3 und einem vierten Mittelabgriff M4, wobei der dritte Mittelabgriff M3 über einen vierten elektronischen Schalter ST4 mit der Versorgungsleitung VL verbindbar und der vierte Mittelabgriff M4 über einen fünften elektronischen Schalter ST5 mit dem zweiten Mittelabgriff M2 verbindbar.

Ferner ist der dritte Mittelabgriff M3 über einen sechsten elektronischen Schalter ST6 mit der Ausgangsleitung AL verbindbar und der vierte Mittelabgriff M4 über einen siebten elektronischen Schalter ST7 mit der Versorgungsleitung VL verbindbar. Die zu einem Ausgang AG führende Ausgangsleitung AL ist über einen ausgangsseitigen Kondensator Ca mit Masse verbunden und an dieser liegt die Ausgangsspannung Ua an.

In Fig. 1 und 2 sind zwei verschiedene Taktzustände A (Fig. 1) und B (Fig. 2) dargestellt, in welchen die verschiedenen Schalter ST1 bis ST7 stehen, um die Ausgangsspannung Ua zu erzeugen.

In einem ersten Taktzustand A, dargestellt in Fig. 1 ist der erste Schalter ST1 geschlossen und der zweite Schalter ST2 geöffnet, so dass an dem ersten Mittelabgriff M1 die Versorgungsspannung Uv anliegt, wobei außerdem noch der dritte Schalter ST3 geschlossen ist und somit der zweite Mittelabgriff M2 auf Masse liegt, so dass der erste zwischen den Mittelabgriffen M1 und M2 liegende Ladungspumpenkondensator C1 auf die Versorgungsspannung Uv aufgeladen wird.

Dabei sind der vierte und fünfte Schalter ST4 und ST5 geöffnet, so dass keine Verbindung zum zweiten Ladungspumpenkondensator C2 besteht, allerdings sind der sechste Schalter ST6 und der siebte Schalter ST7 geschlossen, so dass an der Ausgangsleitung AL die Ausgangsspannung Ua anliegt, welche sich aus der Versorgungsspannung Uv zuzüglich der Spannung des Ladungspumpenkondensators C2 ergibt, die - wie nachfolgend noch im Detail beschrieben - in diesem Fall ungefähr der doppelten Versorgungsspannung Uv entspricht, so dass insgesamt die am Ausgang AG anliegende Ausgangsspannung Ua ungefähr der dreifachen Versorgungsspannung entspricht. Diese Spannung wird durch den Ausgangskondensator Ca stabilisiert.

In einem zweiten Taktzustand B, dargestellt in Fig. 2 ist der erste Schalter ST1 geöffnet, so dass der erste Ladungspumpenkondensator C1 nicht mit der Versorgungsleitung VL verbunden ist. Dagegen ist der zweite Schalter ST2 geschlossen, so dass der erste Mittelabgriff M1 auf Masse liegt.

Ferner sind der dritte Schalter ST3 geöffnet und der fünfte Schalter ST5 geschlossen und außerdem ist auch der vierte Schalter ST4 geschlossen.

Damit sind der erste Ladungspumpenkondensator C1 und der zweite Ladungspumpenkondensator C2 in Reihe geschaltet, wobei der mit dem ersten Mittelabgriff M1 verbundene und im ersten Taktzustand A positiv aufgeladene Anschluss des ersten Ladungspumpenkondensators C1 auf Masse liegt, während der zweite, mit dem zweiten Mittelabgriff M2 verbundene Anschluss des ersten Ladungspumpenkondensators C1, der im ersten Taktzustand A negativ geladen wurde, nunmehr gegenüber Masse ein negatives Potential von -Uv aufweist.

Zwischen diesem negativen Potential von -Uv am Mittelabgriff M2 und dem Potential Uv liegt nun im zweiten Taktzustand B der zweite Ladungspumpenkondensator C2, so dass der zweite Ladungspumpenkondensator C2 auf eine Spannung aufgeladen wird, die ungefähr dem doppelten der Versorgungsspannung Uv entspricht.

Da die Schalter ST6 und ST7 geöffnet sind, besteht keine Verbindung des dritten Mittelabgriffs M3 mit der Ausgangsleitung AL und des vierten Mittelabgriffs M4 mit der Versorgungsleitung VL und der zwischen einem Potential von insgesamt der doppelten Versorgungsspannung Uv liegende zweite Ladungspumpenkondensator C2 wird daher sehr schnell von der Spannungsquelle Q über den ersten Ladungspumpenkondensator C1 aufgeladen.

Der nächste Taktzustand entspricht wieder dem in Fig. 1 dargestellten ersten Taktzustand A, in welchem der zweite Ladungspumpenkondensator C2 zwischen der Ausgangsleitung AL und Masse mit der Spannungsquelle Q in Reihe geschaltet ist, so dass die Ausgangsspannung Ua ungefähr das Dreifache der Versorgungsspannung Uv beträgt.

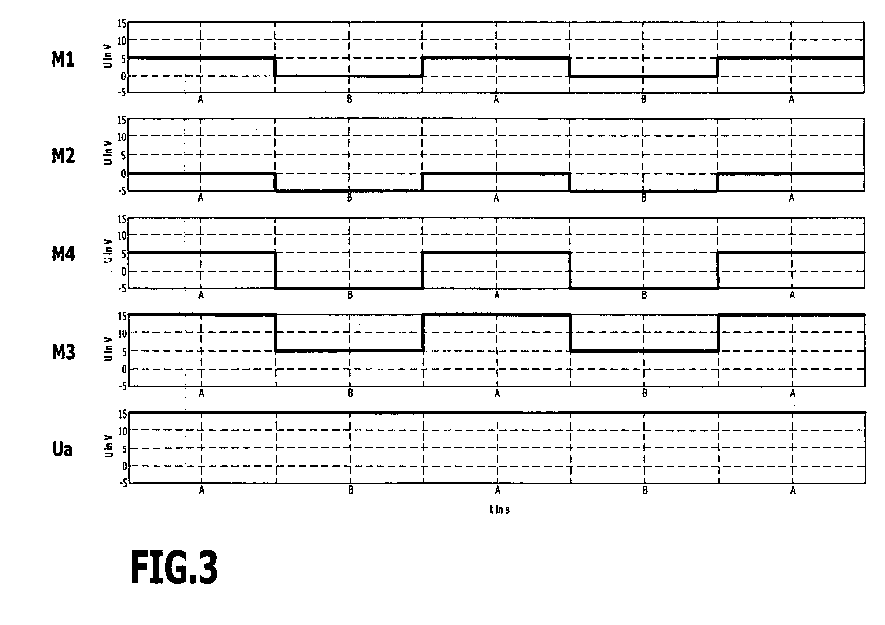

Wechseln nun die Stellungen der Schalter ST1 bis ST7 gemäß dem ersten Taktzustand A in Fig. 1 und die Stellungen der Schalter ST1 bis ST7 gemäß dem zweiten Taktzustand B in Fig. 2 nach jeweils derselben Taktzeitdauer einander ab, so liegen die in Fig. 3 dargestellten Spannungen im ersten Taktzustand A und dem zweiten Taktzustand B an den Mittelabgriffen M1 bis M4 an, so dass sich jeweils ohne Belastung die Ausgangsspannung Ua ergibt, die vom Ausgangskondensator Ca stabil gehalten wird.

Das in Fig. 1 bis 3 dargestellte und im Zusammenhang mit diesen Figuren erläuterte erste Ausführungsbeispiel einer erfindungsgemäßen Spannungsversorgung kann dadurch verbessert werden, dass zwei derartige Ladungspumpenschaltungen L gemäß Fig. 1 bis 3 in zwei Kanälen, nämlich eine in einem Kanal K1 und die andere in einem Kanal K2 zusammengeschaltet werden, wobei der Kanal K1 und der Kanal K2 gegensinnig getaktet werden.

Die elektronischen Schalter ST11 bis ST71 des Kanals K1 entsprechen dabei den elektronischen Schaltern ST1 bis ST7 des ersten Ausführungsbeispiels und werden in gleicher Weise wie im Zusammenhang mit dem ersten Ausführungsbeispiel in Fig. 1 bis 3 erläutert in den beiden Taktzuständen A und B getaktet.

Ferner entsprechen die elektronischen Schalter ST12 bis ST72 des Kanals K2 den elektronischen Schaltern ST1 bis ST7 des ersten Ausführungsbeispiels gemäß Fig. 1 und 3 und diese werden ebenfalls, wie im Zusammenhang mit den Fig. 1 bis 3 des ersten Ausführungsbeispiels erläutert, in den beiden Taktzuständen A und B getaktet, allerdings gegensinnig zum Kanal 1, so dass dann, wenn die Schalter ST11 bis ST71 des Kanals K1 im Taktzustand A sind, die Schalter ST12 bis ST72 des Kanals K2 im Taktzustand B sind und umgekehrt.

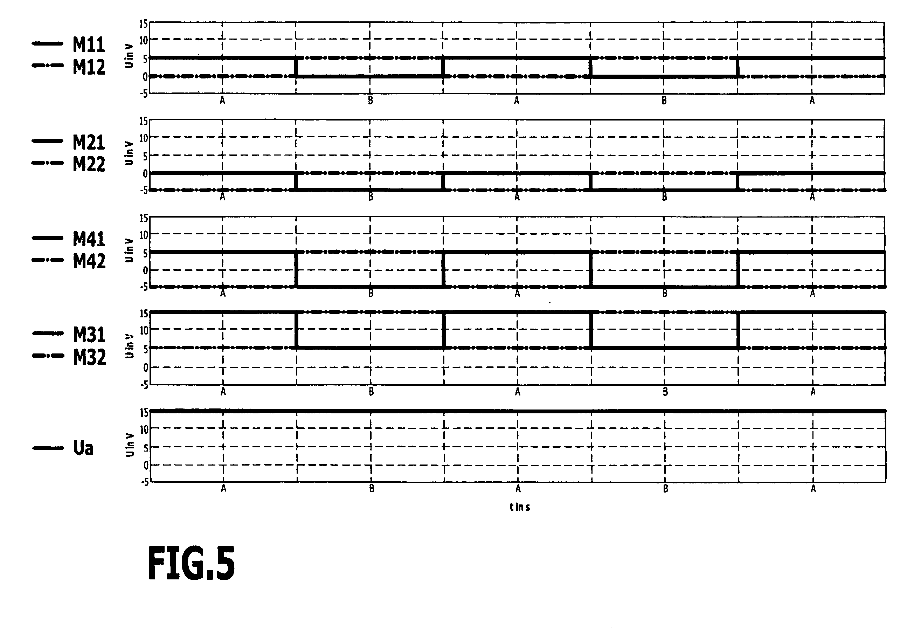

Damit treten an den Mittelabgriffen M11 bis M41 des Kanals K1 und M12 bis M42 des Kanals K2 die in Fig. 5 dargestellten Spannungen auf, wobei sich aus Fig. 5 ergibt, dass dadurch, dass Kanal K1 und Kanal K2 gleichzeitig arbeiten aber gegensinnig getaktet werden, jeweils einer der Kanäle in dem Taktzustand A ist, in welchem eine Speisung der Ausgangsleitung AL dadurch erfolgt, dass der Ladungspumpenkondensator C2 und die Spannungsquelle Q in Reihe zwischen der Ausgangsleitung AL und Masse liegen und somit die Ausgangsspannung Ua, die ungefähr das Dreifache der Versorgungsspannung Uv beträgt, erzeugen.

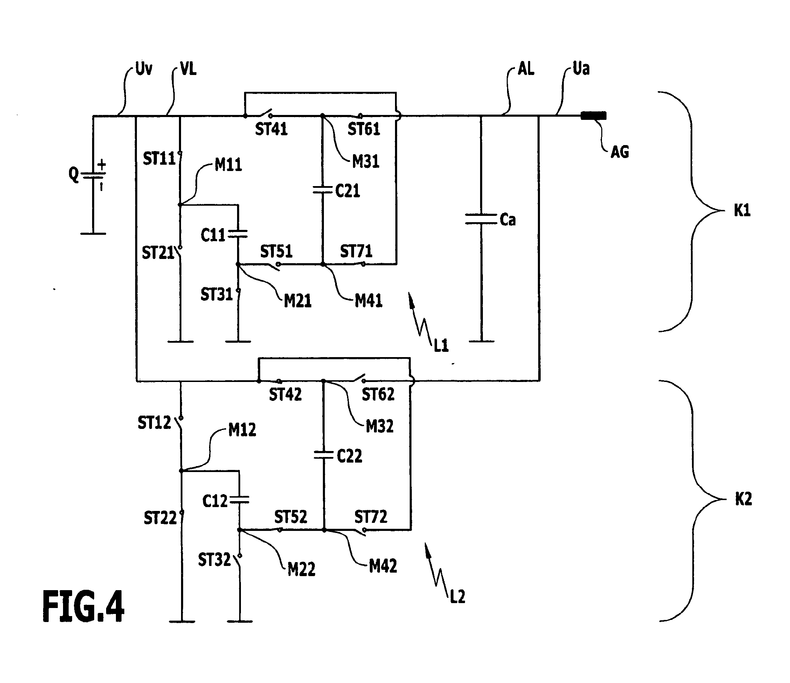

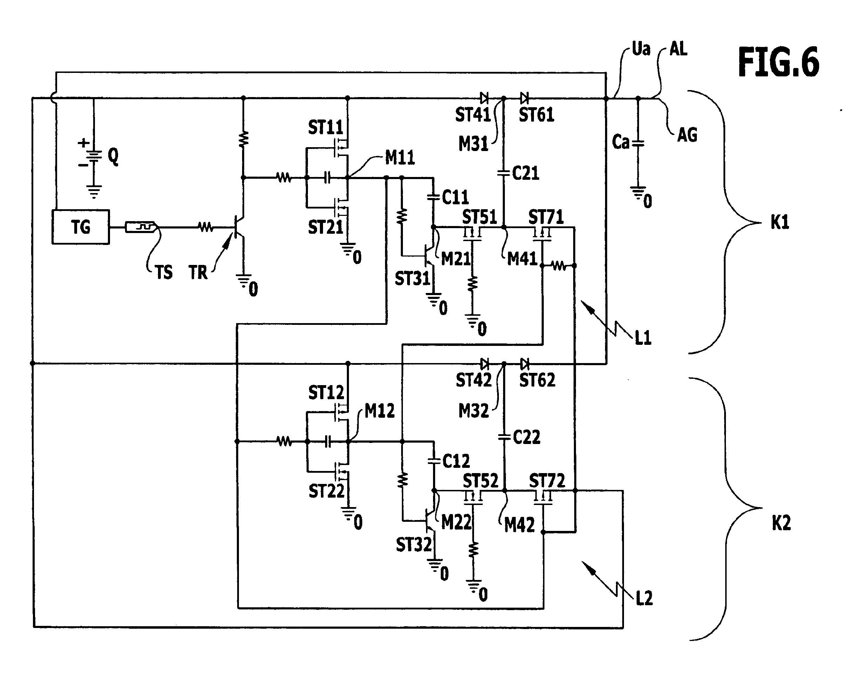

Bei einem dritten Ausführungsbeispiel einer erfindungsgemäßen Spannungsversorgung, dargestellt in Fig. 6 ist das schematisch in Fig. 4 dargestellte zweite Ausführungsbeispiel als reale Schaltung ausgeführt, wobei zusätzlich zu den Schaltern ST11 bis ST71 des Kanals K1 eine Treiberstufe TR vorgesehen ist, welcher das Taktsignal TS zugeführt ist.

Außerdem ist die Ansteuerung der Schalttransistoren ST11 bis ST71 des Kanals K1 und ST12 bis ST72 des Kanals K2 dargestellt, wobei die Ansteuerung jeweils so abgeleitet ist, dass die Schaltstellungen des ersten Taktzustands A im Kanal K1 und des zweiten Taktzustands B im Kanal K2 oder des zweiten Taktzustands B im Kanal K1 und des ersten Taktzustands A im Kanal K2 wechselweise vorliegen.

Ferner wird das Taktsignal TS durch einen Taktgenerator TG erzeugt, welcher die Taktzeiten des Taktzustands A und des Taktzustands B synchron verlängert oder verkürzt um somit die sich bei einer Last zwischen der Ausgangsleitung AL und Masse einstellende Spannung Ua auf einem Niveau optimiert einstellen zu können, das zwischen der Versorgungsspannung Uv und der dreifachen Spannung Uv liegt. Die Variation der Taktzeit der ersten und zweiten Taktzustände A und B hat dabei eine unterschiedlich große Ladezeit für die ersten Ladungspumpenkondensatoren C11 und C12 und die zweiten Ladungspumpenkondensatoren C21 und C22 und somit geringere, sich an den jeweiligen Mittelabgriffen M einstellende Spannungen zur Folge.

Sind die Taktzeitdauern der Taktzustände A und B des Taktgenerators TG in Abhängigkeit von der Ausgangsspannung Ua steuerbar, so besteht die Möglichkeit, die Ausgangsspannung Ua auf Werten zwischen der Spannung 0 und der einer maximalen Spannung Ua, die ungefähr die dreifache Spannung Uv beträgt, konstant zu halten.

Ferner sind beim dritten Ausführungsbeispiel die Schalttransistoren ST41 und ST61 sowie ST42 und ST62 durch Dioden ersetzt die dieselbe Funktion haben, wie sie im Zusammenhang mit den Schalttransistoren ST41, ST42, ST61 und ST62 beschrieben wurden.

Hinsichtlich der Funktion der Ladungspumpenschaltungen L1 und L2 des dritten Ausführungsbeispiels wird vollinhaltlich auf die Ausführungen zum zweiten und ersten Ausführungsbeispiel Bezug genommen.

## Patentansprüche

1. Spannungsversorgung umfassend eine Spannungsquelle (Q), welche eine Versorgungsspannung (Uv) zur Verfügung stellt, und eine von dieser gespeiste Ladungspumpenschaltung (L) zur Erzeugung einer Ausgangsspannung (Ua) an einem Ausgang (AG), die Ladungspumpenschaltung (L) aufweisend einen ersten Ladungspumpenkondensator (C1) und einen zweiten Ladungspumpenkondensator (C2), wobei
die Ladungspumpenschaltung (L) abwechselnd einen ersten Taktzustand (A) und einen zweiten Taktzustand (B) aufweist, **dadurch gekennzeichnet, dass**
- in dem ersten Taktzustand (A) der erste Ladungspumpenkondensator (C1) zwischen Versorgungsspannung (Uv) und Masse geschaltet ist und durch die Spannungsquelle (Q) auf die Versorgungsspannung (Uv) aufgeladen wird und der zweite Ladungspumpenkondensator (C2) zwischen die Spannungsquelle (Q) und den Ausgang (AG) in Reihe geschaltet ist, und wobei
- in dem zweiten Taktzustand (B) der erste Ladungspumpenkondensator (C1) und der zweite Ladungspumpenkondensator (C2) derart in Reihe geschaltet sind, dass der im ersten Taktzustand (A) positiv aufgeladene Anschluss des ersten Ladungspumpenkondensators (C1) auf Masse liegt und der zweite Ladungspumpenkondensator (C2) durch die Spannungsquelle (Q) aufgeladen wird, sodass die Ausgangsspannung (Uₐ) bis zum Dreifachen der Versorgungsspannung (Uᵥ) erreichen kann.

2. Spannungsversorgung nach Anspruch 1, **dadurch gekennzeichnet, dass** die Spannungsversorgung mindestens zwei parallel arbeitende Kanäle (K1, K2) aufweist, von denen jeder mindestens eine Ladungspumpenschaltung (L) umfasst, und dass die Kanäle (K1, K2), abwechselnd den Ausgang (AG) speisen.

3. Spannungsversorgung nach Anspruch 2, **dadurch gekennzeichnet, dass** die Ladungspumpenschaltungen (L) zwei Taktzustände (A, B) aufweisen und dass stets die Ladungspumpenschaltung (L1) des einen Kanals (K1) in einem Taktzustand (A, B) und die Ladungspumpenschaltung (L2) des anderen Kanals (K2) in dem anderen Taktzustand (B, A) ist.

4. Spannungsversorgung nach Anspruch 2, **dadurch gekennzeichnet, dass** die Ladungspumpenschaltungen (L1, L2) synchron getaktet sind.

5. Spannungsversorgung nach einem der Ansprüche 2 bis 4, **dadurch gekennzeichnet, dass** die Ladungspumpenschaltungen (L1, L2) der zwei Kanäle (K1, K2) durch einen Taktgenerator (TG) getaktet sind.

6. Spannungsversorgung nach einem der voranstehenden Ansprüche, **dadurch gekennzeichnet, dass** die Ladungspumpenschaltung (L) mit einer zwei Schalter (ST1, ST2) umfassenden push-pull-Stufe einen ersten Anschluss (M1) des ersten Ladungspumpenkondensators (C1) wechselweise mit einer Versorgungsleitung (VL) und Masse verbindet.

7. Spannungsversorgung nach Anspruch 6, **dadurch gekennzeichnet, dass** die Ladungspumpenschaltung (L) mit zwei Schaltern (ST3, ST5) einen zweiten Anschluss (M2) des ersten Ladungspumpenkondensators (C1) wechselweise mit Masse verbindet oder mit dem zweiten Ladungspumpenkondensator (C2) in Reihe schaltet.

## Claims

1. A power supply, comprising a voltage source (Q) which provides a supply voltage (Uv) and a charge pump circuit (L) supplied by same for generating an output voltage (Ua) at an output (AG), the charge pump circuit (L) comprising a first charge pump capacitor (C1) and a second charge pump capacitor (C2), wherein the charge pump circuit (L) alternatingly exhibits a first clock state (A) and a second clock state (B),
**characterized in that**
- in the first clock state (A), the first charge pump capacitor (C1) is connected between the supply voltage (Uv) and ground and is charged to the supply voltage (Uv) by the voltage source (Q), and the second charge pump capacitor (C2) is connected in series between the voltage source (Q) and the output (AG), and wherein
- in the second clock state (B), the first charge pump capacitor (C1) and the second charge pump capacitor (C2) are connected in series such that a charged connection of the first charge pump capacitor (C1) in the first clock state (A) is grounded, and the second charge pump capacitor (C2) is charged by the voltage source (Q) such that the output voltage (Ua) can reach up to three times the supply voltage (Uv).

2. The power supply according to claim 1, **characterized in that** the power supply comprises at least two channels (K1, K2) operating in parallel, each of which comprises at least one charge pump circuit (L), and that the channels (K1, K2) alternately supply the output (AG).

3. The power supply according to claim 2, **characterized in that** the charge pump circuits (L) exhibit two clock states (A, B) and that the charge pump circuit (L1) of one channel (K1) is always in one clock state (A, B) and the charge pump circuit (L2) of the other channel (K2) is always in the other clock state (B, A).

4. The power supply according to claim 2, **characterized in that** the charge pump circuits (L1, L2) are clocked synchronously.

5. The power supply according to any one of claims 2 to 4, **characterized in that** the charge pump circuits (L1, L2) of the two channels (K1, K2) are clocked by one clock generator (TG).

6. The power supply according to any one of the preceding claims, **characterized in that** the charge pump circuit (L) alternately connects a push-pull stage of a first connection (M1) of the first charge pump capacitor (C1) to a supply line (VL) and to a ground by means of two switches (ST1, ST2).

7. The power supply according to claim 6, **characterized in that** the charge pump circuit (L) alternately connects a second connection (M2) of the first charge pump capacitor (C1) to ground or to the second charge pump capacitor (C2) in series by means of two switches (ST3, ST5).

## Revendications

1. Alimentation en tension comprenant une source de tension (Q), qui met à disposition une tension d'alimentation (Uv), et un circuit-pompe de charge (L) alimenté par cette source pour engendrer une tension de sortie (Ua) à une sortie (AG), le circuit-pompe de charge (L) comportant un premier condensateur-pompe de charge (C1) et un second condensateur-pompe de charge (C2), dans laquelle le circuit-pompe de charge (L) présente en alternance un premier état de cadence (A) et un second état de cadence (B),
**caractérisée en ce que**
- dans le premier état de cadence (A) le premier condensateur-pompe de charge (C1) est branché entre la tension d'alimentation (Uv) et la masse et est chargé au moyen de la source de tension (Q) jusqu'à la tension d'alimentation (Uv), et le second condensateur-pompe de charge (C2) est branché en série entre la source de tension (Q) et la sortie (AG), et **en ce que**
- dans le second état de cadence (B) le premier condensateur-pompe de charge (C1) et le second condensateur-pompe de charge (C2) sont branchés en série de telle façon que la borne chargée positivement, dans le premier état de cadence (A), du premier condensateur-pompe de charge (CA) est à la masse et le second condensateur-pompe de charge (C2) est chargé par la source de tension (Q), de sorte que la tension de sortie (Ua) peut atteindre jusqu'à trois fois la tension d'alimentation (Uv).

2. Alimentation en tension selon la revendication 1, **caractérisée en ce que** le l'alimentation en tension comprend au moins deux canaux (K1, K2) fonctionnant en parallèle, parmi lesquels chacun comprend au moins un circuit-pompe de charge (L), et **en ce que** les canaux (K1, K2) alimentent alternativement la sortie (AG).

3. Alimentation en tension selon la revendication 2, **caractérisée en ce que** les circuits-pompe de charge (L) présentent deux états de cadence (A, B), et **en ce que** le circuit-pompe de charge (L1) de l'un des canaux (K1) est toujours dans un état de cadence (A, B), et le circuit-pompe de charge (L2) de l'autre canal (K2) est toujours dans l'autre état de cadence (B, A).

4. Alimentation en tension (4) selon la revendication 2, **caractérisée en ce que** les circuits-pompe de charge (L1, L2) sont cadencés de manière synchrone.

5. Alimentation en tension selon l'une des revendications 2 à 4, **caractérisée en ce que** les circuits-pompe de charge (L1, L2) des deux canaux (K1, K2) sont cadencés par un générateur de cadence (TG).

6. Alimentation en tension selon l'une des revendications précédentes, **caractérisée en ce que** le circuit-pompe de charge (L) connecte, avec un étage push-pull incluant deux commutateurs (ST1, ST2) une première borne (M1) du premier condensateur-pompe de charge (C1) alternativement avec une ligne d'alimentation (VL) et avec la masse.

7. Alimentation en tension selon la revendication 6, **caractérisée en ce que** le circuit-pompe de charge (L) connecte, avec deux commutateurs (ST3, ST5), une seconde borne (M2) du premier condensateur-pompe de charge (C1) alternativement avec la masse ou la branche en série avec le second condensateur-pompe de charge (C2).
